# EUROPÄISCHE PATENTSCHRIFT

(11) **EP 2 535 993 B1**
(45) Veröffentlichungstag und Bekanntmachung des Hinweises auf die Patenterteilung: **30.03.2016**
(21) Anmeldenummer: 11170172.8
(22) Anmeldetag: 16.06.2011
(51) Int. Cl.: H02H 7/08, H02H 7/093

(54) **Schneller und redundanter Übertemperaturschutz mit sicherem Halt für einen EC-Motor**
Fast and redundant overtemperature protection with safe-off for EC motor
Protection contre suréchauffement vite et redondant avec arrêt sécurisé pour un moteur à commutation électronique

(43) Veröffentlichungstag der Anmeldung: 19.12.2012
(73) Patentinhaber: ebm-papst Mulfingen GmbH & Co. KG, 74673 Mulfingen (DE)
(72) Erfinder: Lipp, Helmut, 74677 Dörzbach-Hohebach (DE); Bürkert, Martin, 74677 Dörzbach-Hohebach (DE); Kranz, Christian, 97990 Weikersheim (DE); König, Daniel, 74582 Gerabronn (DE)
(74) Vertreter: Peter, Julian

(56) Entgegenhaltungen:
- EP-A2- 1 311 047
- EP-A2- 1 748 545
- DE-A1- 10 261 452
- DE-A1- 19 944 197
- DE-U1-202004 020 586
- PETER WRATIL ED - ANONYMOUS: "Technology of safe Drives", INDUSTRIAL INFORMATICS, 2007 5TH IEEE INTERNATIONAL CONFERENCE ON, IEEE, PI, 1 July 2007 (2007-07-01), pages 155-161, XP031161785, ISBN: 978-1-4244-0850-4

## Beschreibung

Die vorliegende Erfindung betrifft gemäß dem Oberbegriff des Anspruchs 1 eine Ansteuerschaltung für einen kollektorlosen, elektronisch kommutierten Gleichstrom-Motor, d. h. für einen so genannten EC-Motor (EC = electronically commutated = elektronisch kommutiert), häufig auch BLDC-Motor genannt (BLDC = brushless direct current), mit einer an einer Versorgungsgleichspannung liegenden Halbleiter-Endstufe, die von einer elektronischen Kommutierungssteuerung über eine Treiberstufe zum zeitlich versetzten Ansteuern von Statorwicklungen des Motors zwecks Erzeugung eines magnetischen Drehfeldes für einen Rotor in Abhängigkeit von der Rotor-Drehstellung angesteuert wird.

Solche EC-Motoren müssen entsprechend bestimmter Normen-Vorgaben vor Überhitzungen im Falle von abnormalen Betriebssituationen geschützt werden.

Dazu ist es zunächst bekannt, innerhalb des Motors im Bereich der Statorwicklungen so genannte Temperaturwächter zu platzieren, die als temperaturabhängige Schalter bei Erreichen einer bestimmten Grenztemperatur auslösen und in aller Regel den Betriebsstrom direkt oder aber mittelbar über ein Auslöseglied abschalten. Bei bestimmten Motoren, wie z. B. bei Außenläufermotoren, ist es aber konstruktiv und fertigungstechnisch aufwändig, Temperaturwächter in oder an der Statorwicklung so unterzubringen, dass sie auch schnelle Temperaturanstiege, wie sie insbesondere bei Blockierung des Motors auftreten können, erkennen und dann den Motor sicher abschalten können.

Es ist weiterhin bekannt, Motoren impedanzgeschützt auszuführen, d. h. den Wicklungswiderstand und den Drahtdurchmesser so zu dimensionieren, dass keine Überhitzung bei abnormalem Betrieb auftreten kann. Bei EC-Motoren insbesondere mit Einzelzahnwicklungen ist eine Ausführung mit Impedanzschutz aber nicht möglich, weil die Wicklungswiderstände sehr klein sind.

Bisher wurde deshalb in die Kommutierungssteuerung eine Software-Strombegrenzung integriert, die softwaremäßig einen unteren Schwellwert für den Anlaufstrom und einen oberen Schwellwert für den Betriebsstrom vorgibt. Wird in der Anlaufphase der untere Schwellwert erreicht oder überschritten, so wird der Motor abgeschaltet. Wenn der Motor aber korrekt anläuft, wird auf eine Überwachung des Betriebsstroms hinsichtlich des oberen Schwellwertes umgeschaltet, und wenn der obere Schwellwert erreicht oder überschritten wird, wird der Motor abgeschaltet.

Solche, allein durch Software realisierte Schutzmaßnahmen werden allerdings von bestimmten Zulassungsstellen, wie z. B. UL (Underwriters Laboratories), bei Prüfungen für die Vergabe von bestimmten Prüfzeichen nicht berücksichtigt.

In der DE 199 44 197 A1 ist eine Schutzschaltung beschrieben, die eine Ist-Drehzahl mit einer Soll-Drehzahl vergleicht und bei einer bestimmten Drehzahlabweichung den Motor durch Abschaltung der Versorgungsspannung der Steuereinheit und/oder der Halbleiter-Endstufe schützt.

Die DE 20 2004 020 586 U1 offenbart eine Motorsteuerung mit Überlastschutz, wobei ein Begrenzer die Steuerspannung auf einen Maximalwert begrenzt.

Die DE 102 61 452 A1 offenbart eine Sicherheitsvorrichtung, die ein durch eine externe Sicherheits- und Überwachungsschaltung übermitteltes Halt-Signal verwendet, um einen EC-Motor anzuhalten. Die Funktionsfähigkeit der Sicherheitsvorrichtung wird mittels eines Mikroprozessors überwacht, indem der Mikroprozessor die Soll-Drehzahl mittels eines Sensors zum Messen der Folge-Frequenz der dem Motor zugeführten Schaltimpulse misst und dabei überprüft, ob die korrekte Soll-Drehzahl für das Halt-Signal eingestellt wurde. Dabei umfasst die Sicherheitsvorrichtung zwei Verzögerungsglieder, die nach einer bestimmten Zeitverzögerung nach dem Absetzen des Halt-Signals einerseits die Spannungsversorgung des Schaltimpulstreibers ausschalten und andererseits ein Rücksetzsignal an den Digitalen-Signalprozessor und den Pulsdauermodulator anlegen. der Mikroprozessor überwacht auch die Funktionalität der Verzögerungsglieder und löst bei einer Fehlfunktion ein Alarmsignal aus. Basierend auf diesem Alarm-Signal kann wiederum die Hauptstromversorgung unterbrochen werden. Zudem umfasst die Sicherheitsvorrichtung zwei Drehzahlüberwacher für eine Drehzahlüberwachung nach Norm IEC 61800-5. Für die Drehzahlüberwachung werden unter anderem Drehzahlsensoren verwendet, mittels derer eine bestimmte Betriebsdrehzahl überwacht wird, wobei der Motor bei einem Überschreiten einer maximalen Betriebsdrehzahl aus Sicherheitsgründen abgeschaltet werden soll.

Der vorliegenden Erfindung liegt die Aufgabe zu Grunde, eine Ansteuerschaltung der eingangs beschriebenen, gattungsgemäßen Art zu schaffen, die eine erhöhte Betriebssicherheit zur Vermeidung von Motor-Überhitzungen gewährleistet.

Erfindungsgemäß wird dies durch die Merkmale des unabhängigen Anspruchs 1 erreicht. Vorteilhafte Ausgestaltungsmerkmale der Erfindung sind in den abhängigen Ansprüchen und in der anschließenden Beschreibung enthalten.

Demnach weist die Ansteuerschaltung erfindungsgemäß - in Hardware-Ausführung - zwei redundante Blockierschutzeinheiten auf, die den Motor im Betrieb, d. h. bei Vorhandensein von Treibersignalen für die Treiberstufe, auf Drehung des Rotors überwachen, wobei im Falle eines festgestellten Stillstandes die erste Blockierschutzeinheit die Treiberstufe deaktiviert und die zweite Blockierschutzeinheit eine Versorgungsspannung für die Treiberstufe abschaltet.

Durch diese erfindungsgemäße Ausgestaltung wird die angestrebte hohe Betriebssicherheit erreicht, weil selbst dann, wenn die Software-Strombegrenzung aus bestimmten Gründen ausfallen sollte, über wenigstens eine der zwei redundanten Blockierschutzeinheiten in einem abnormalen Betriebszustand eine sichere Abschaltung des Motors gewährleistet ist.

Gemäß der Erfindung sind außerdem - ebenfalls in Hardware-Ausführung - zwei redundante Überstromschutzeinheiten vorgesehen, die den Motor-Betriebsstrom überwachen, wobei die erste Überstromschutzeinheit im Falle eines Überschreitens eines ersten Strom-Grenzwertes die Treiberstufe deaktiviert, und wobei die zweite Überstromschutzeinheit im Falle eines Überschreitens eines zweiten Strom-Grenzwertes die Versorgungsspannung für die Treiberstufe abschaltet. Hierbei ist dann - in Anpassung an eine in der Kommutierungssteuerung implizierte Software-Strombegrenzung - vorgesehen, dass der erste Strom-Grenzwert der ersten Überstromschutzeinheit geringfügig größer als ein oberer Schwellwert der Software-Strombegrenzung für den Betriebsstrom ist, während der zweite Strom-Grenzwert der zweiten Überstromschutzeinheit geringfügig größer als ein unterer Schwellwert der Software-Strombegrenzung für den Anlaufstrom ist. Dadurch wird erreicht, dass - sollte die elektronische Software-Strombegrenzung ausfallen - beim Anlauf spätestens bei Erreichen oder Überschreiten des zweiten Strom-Grenzwertes und im Betrieb spätestens bei Erreichen oder Überschreiten des ersten Strom-Grenzwertes abgeschaltet wird. Dazu wird die zweite Überstromschutzeinheit im Betrieb bei festgestelltem Lauf des Motors deaktiviert, und zwar vorzugsweise über ein Betriebssignal einer der beiden erfindungsgemäßen Blockierschutzeinheiten.

Nachfolgend soll die Erfindung anhand eines bevorzugten Ausführungsbeispiels genauer erläutert werden.

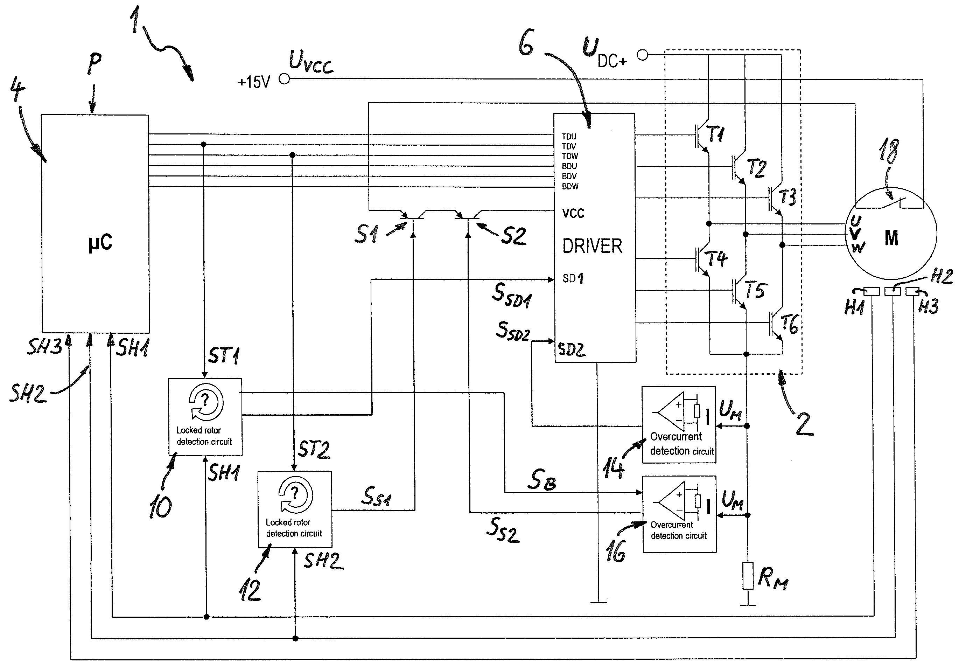

Die einzige Zeichnungsfigur zeigt ein Blockschaltbild einer erfindungsgemäßen Ansteuerschaltung.

Eine erfindungsgemäße Ansteuerschaltung 1 dient zum Betreiben eines kollektorlosen, elektronisch kommutierten Gleichstrom-Motors M, wie er auch unter den Begriffen EC-Motor oder BLDC-Motor bekannt ist. Im dargestellten Ausführungsbeispiel ist der Motor M dreisträngig mit drei Statorwicklungen ausgebildet, die in der Zeichnung ohne gesonderte Darstellung mit U, V, W bezeichnet und insbesondere in Sternschaltung geschaltet sind. Grundsätzlich ist jedoch auch eine Dreieckschaltung möglich. Die Ansteuerschaltung 1 weist eine Halbleiter-Endstufe 2 auf, die an einer Versorgungsgleichspannung U_{DC} liegt und von einer elektronischen Kommutierungssteuerung 4 über eine Treiberstufe 6 zum zeitlich versetzten Ansteuern der Statorwicklungen des Motors M zwecks Erzeugung eines magnetischen Drehfeldes für dessen Rotor in Abhängigkeit von der Rotor-Drehstellung angesteuert wird. Für die dreisträngige Motorausführung ist die Endstufe 2 als Drehstrom-Vollbrücke mit sechs gesteuerten Halbleiter-Schaltelementen T1 bis T6 aufgebaut. Die Schaltelemente T1 bis T3 der "oberen" Brückenzweige werden auch als Highside-Schalter bezeichnet und die Schaltelemente T4 bis T6 der "unteren" Brückenzweige als Lowside-Schalter. Die Schaltelemente T1 bis T6 werden jeweils paarweise in aufeinanderfolgend verschiedenen Kombinationen von der Kommutierungssteuerung 4 über die Treiberstufe 6 angesteuert. Dazu generiert die Kommutierungssteuerung 4 in Abhängigkeit von Rotor-Drehstellungssignalen SH1 bis SH3 Treibersignale für die Treiberstufe 6, die ihrerseits entsprechende Steuersignale für die Schaltelemente T1 bis T6 generiert. Über diese Ansteuerung kann auch eine Einstellung und/oder Regelung der Drehzahl des Motors M erfolgen, und zwar insbesondere durch PWM-Taktung der Highside-Schaltelemente T1 bis T3. Der Kommutierungssteuerung 4 können von außen bestimmte Steuer-Parameter P zugeführt werden.

Die Einzelheiten einer solchen Motor-Steuerung sind bekannt, so dass auf weitere Erläuterungen verzichtet werden kann.

Die Erfassung der Rotor-Drehstellung zur Erzeugung der Drehstellungssignale SH1 bis SH3 kann auf beliebige Weise erfolgen, wie dargestellt beispielsweise über Sensoren, insbesondere Hall-Sensoren H1, H2, H3 im Motor M, oder auch sensorlos mittels Auswertung der Motor-EMK. Die Kommutierungssteuerung 4 kann von einem Mikroprozessor oder Mikrocontroller µC mit geeigneter, üblicher Peripherie gebildet sein.

Erfindungsgemäß sind nun in die Ansteuerschaltung 1 hardwaremäßig zwei redundante Blockierschutzeinheiten 10 und 12 integriert, die den Motor M im Betrieb, d. h. bei Vorhandensein von Treibersignalen für die Treiberstufe 6, auf Drehung des Rotors überwachen, wobei im Falle eines durch Überwachung der Drehstellungssignale festgestellten Stillstandes bzw. einer Blockierung des Rotors die erste Blockierschutzeinheit 10 die Treiberstufe 6 deaktiviert und die zweite Blockierschutzeinheit 12 eine Versorgungsspannung U_{VCC} für die Treiberstufe 6 abschaltet.

Jeder der beiden Blockierschutzeinheiten 10, 12 werden zwei Eingangssignale zugeführt, einerseits ein Treibersignal der Kommutierungssteuerung 4, und zwar vorzugsweise ein Highside-Treibersignal ST1 bzw. ST2, und andererseits ein Rotor-Drehstellungssignal SH1 bzw. SH2 der Drehstellungserfassungseinrichtung H1 bis H3. Für eine hohe Sicherheit ist es vorteilhaft, den beiden Blockierschutzeinheiten 10, 12 zwei verschiedene Treibersignale ST1, ST2 sowie zwei verschiedene Drehstellungssignale SH1, SH2 zuzuführen. Indem jeweils Highside-Treibersignale überwacht werden, kann anhand der Taktung sicher erkannt werden, ob sich der Motor M im Kommutierungsbetrieb und nicht etwa in einem Brems- oder Vorladebetrieb befindet. Es muss innerhalb einer festgelegten Zeit eine Motordrehung durch eine Änderung des jeweiligen Drehstellungssignals festgestellt werden. Läuft der Motor M beispielsweise wegen einer Blockierung nicht an, so tritt keine Änderung der Drehstellungssignale auf. Dadurch lösen die Blockierschutzeinheiten 10 und 12 entsprechend unabhängig voneinander aus und schalten über die Treiberstufe 6 die Endstufe 2 schnell und sicher ab. Hierbei wird eine zweifache Sicherheit zur Vermeidung von schnellen Temperaturanstiegen gewährleistet.

Zum Deaktivieren der Treiberstufe 6 gibt die erste Blockierschutzeinheit 10 ein Steuersignal S_{SD1} an einen Abschalteingang SD1 (SD = shut down) der Treiberstufe 6 ab. Die zweite Blockierschutzeinheit 12 schaltet die Treiber-Versorgungsspannung U_{VVC} über ein einem Spannungsversorgungseingang VCC der Treiberstufe 6 vorgeschaltetes Schaltelement S1 ab, und zwar über ein Steuersignal S_{S1}.

Gemäß der Erfindung sind zum Schutz der Endstufe 2 gegen Überhitzung in die Ansteuerschaltung 1 zusätzlich - ebenfalls hardwaremäßig - zwei redundante Überstromschutzeinheiten 14 und 16 integriert, die den Motor-Betriebsstrom überwachen. Dazu wird zweckmäßigerweise jeweils eine Messspannung UM an einem in Reihe mit der Endstufe 2 liegenden Messwiderstand R_{M} als Eingangssignal zugeführt. Diese den jeweiligen Betriebsstrom repräsentierende Messspannung U_{M} wird jeweils mit einem vorgegebenen Strom-Grenzwert verglichen. Die erste Überstromschutzeinheit 14 deaktiviert im Falle eines Überschreitens eines ersten Strom-Grenzwertes die Treiberstufe 6. Die zweite Überstromschutzeinheit 16 schaltet im Falle eines Überschreitens eines zweiten Strom-Grenzwertes die Versorgungsspannung U_{VCC} für die Treiberstufe 6 ab.

Wie eingangs bereits erläutert wurde, ist in die Ansteuerschaltung 1 auch eine übliche Software-Strombegrenzung integriert, der ein oberer Schwellwert für den Betriebsstrom und ein unterer Schwellwert für den Anlaufstrom vorgegeben sind. Bei Erreichen oder Überschreiten dieser Schwellwerte wird softwaremäßig die Steuerung abgeschaltet.

Durch die zusätzlichen Überstromschutzeinheiten 14, 16 wird eine erhöhte Sicherheit erreicht. Der erste Strom-Grenzwert der ersten Überstromschutzeinheit 14 wird mit einem geringfügig größeren Wert als der obere Schwellwert der Software-Strombegrenzung für den Betriebsstrom vorgegeben, während der zweite Strom-Grenzwert der zweiten Überstromschutzeinheit 16 geringfügig größer als der untere Schwellwert der Software-Strombegrenzung für den Anlaufstrom vorgegeben wird. In einer realisierten Ausführung beträgt der obere Schwellwert der Software-Strombegrenzung beispielsweise 12,0 A, während der untere Schwellwert für den Anlaufstrom z. B. bei 8,1 A liegt. Hierbei liegt dann der erste Strom-Grenzwert der ersten Überstromschutzeinheit 14 um etwa 0,7 A über dem oberen Schwellwert, also bei 12,7 A. Der zweite Strom-Grenzwert der zweiten Überstromschutzeinheit 16 kann ebenfalls um etwa 0,7 A über dem unteren Schwellwert für den Anlaufstrom liegen, also bei 8,8 A. Dadurch wird erreicht, dass im Falle eines Ausfalls der Software-Strombegrenzung in einem abnormalen Betriebszustand dennoch sicher abgeschaltet wird, und zwar beim Anlauf bei Erreichen oder Überschreiten des zweiten Strom-Grenzwertes und im Betrieb bei Erreichen oder Überschreiten des ersten Strom-Grenzwertes.

Erfindungsgemäß wird die zweite Überstromschutzeinheit 16 im Betrieb bei festgestelltem Lauf des Motors M deaktiviert. Dies kann über ein Betriebssignal S_{B} einer der Blockierschutzeinheiten 10 oder 12, im dargestellten Beispiel der ersten Blockierschutzeinheit 10, erfolgen. Hierdurch wird verhindert, dass im Betrieb mehrere Strombegrenzungen wirksam sind.

Die erste Überstromschutzeinheit 14 deaktiviert die Treiberstufe 6, indem sie ein Steuersignal S_{SD2} an einen weiteren Abschalteingang SD2 der Treiberstufe 6 abgibt. Die zweite Überstromschutzeinheit 16 schaltet die Treiber-Versorgungsspannung U_{VCC} über ein weiteres, zweites dem Spannungsversorgungseingang VCC der Treiberstufe 6 vorgeschaltetes Schaltelement S2 ab. Folglich liegen die beiden Schaltelemente S1 und S2 in Reihe vor dem Spannungsversorgungseingang VCC. Zum Abschalten generiert die Überstromschutzeinheit 16 ein Steuersignal S_{S2} für das Schaltelement S2.

In Kombination mit den erfindungsgemäßen Maßnahmen ist innerhalb des Motors M auch mindestens ein üblicher Temperaturwächter 18 angeordnet, wobei die Treiber-Versorgungsspannung U_{VCC} über diesen Temperaturwächter 18 zugeführt wird. Folglich liegt der Temperaturwächter 18 in Reihe mit den Schaltelementen S1 und S2 in der Versorgungsleitung für die Versorgungsspannung U_{VCC}, die beispielsweise 15 V betragen kann. Durch diese Ausgestaltung braucht der Temperaturwächter 18 - anstatt des vollen Laststroms - lediglich einen geringen Steuerstrom von einigen mA zu schalten und kann daher klein und kostengünstig ausgeführt sein. Funktionell ist der in einer Statornut positionierte Temperaturwächter 18 im Falle einer langsam steigenden Temperatur der Wicklung wirksam.

Es sei noch erwähnt, dass die Versorgungsgleichspannung U_{DC} bevorzugt durch Gleichrichtung aus einer Netzwechselspannung gewonnen wird. Die Spannung wird daher häufig auch als Zwischenkreisspannung bezeichnet.

## Patentansprüche

1. Ansteuerschaltung (1) für einen kollektorlosen, elektronisch kommutierten Gleichstrom-Motor (M), mit einer Halbleiter-Endstufe (2), die von einer elektronischen Kommutierungssteuerung (4) über eine Treiberstufe (6) zum zeitlich versetzten Ansteuern von Statorwicklungen (U, V, W) des Motors (M) zwecks Erzeugung eines magnetischen Drehfeldes für einen Rotor in Abhängigkeit von der Rotor-Drehstellung angesteuert wird,
**gekennzeichnet durch** zwei redundante Blockierschutzeinheiten (10, 12), die den Motor (M) im Betrieb auf Drehung des Rotors überwachen, wobei im Falle eines festgestellten Stillstandes die erste Blockierschutzeinheit (10) die Treiberstufe (6) deaktiviert und die zweite Blockierschutzeinheit (12) eine Versorgungsspannung (Uvcc) für die Treiberstufe (6) abschaltet, und
zwei redundante Überstromschutzeinheiten (14, 16), die den Motor-Betriebsstrom überwachen, wobei die erste Überstromschutzeinheit (14) im Falle eines Überschreitens eines ersten Strom-Grenzwertes die Treiberstufe (6) deaktiviert, und wobei die zweite Überstromschutzeinheit (16) im Falle eines Überschreitens eines zweiten Strom-Grenzwertes die Versorgungsspannung (U_{VCC}) für die Treiberstufe (6) abschaltet, wobei in Anpassung an eine in die Ansteuerschaltung (1) integrierte Software-Strombegrenzung vorgesehen ist, dass der erste Strom-Grenzwert der ersten Überstromschutzeinheit (14) geringfügig größer als ein oberer Schwellwert der Software-Strombegrenzung für den Betriebsstrom ist, während der zweite Strom-Grenzwert der zweiten Überstromschutzeinheit (16) geringfügig größer als ein unterer Schwellwert der Software-Strombegrenzung für den Anlaufstrom ist, so dass - sollte die elektronische Software-Strombegrenzung ausfallen - beim Anlauf spätestens bei Erreichen oder Überschreiten des zweiten Strom-Grenzwertes und im Betrieb spätestens bei Erreichen oder Überschreiten des ersten Strom-Grenzwertes abgeschaltet wird, wobei die zweite Überstromschutzeinheit (16) im Betrieb bei festgestelltem Lauf des Motors (M) deaktiviert wird.

2. Ansteuerschaltung nach Anspruch 1,
**dadurch gekennzeichnet, dass** jeder der beiden Blockierschutzeinheiten (10, 12) zwei Eingangssignale, und zwar einerseits ein Treibersignal (ST1 / ST2) der Kommutierungssteuerung (4) und andererseits ein Rotor-Drehstellungssignal (SH1 / SH2) einer Drehstellungserfassungseinrichtung (H1 bis H3) zugeführt werden.

3. Ansteuerschaltung nach Anspruch 2,
**dadurch gekennzeichnet, dass** den zwei Blockierschutzeinheiten (10, 12) zwei verschiedene Treibersignale (ST1, ST2) sowie zwei verschiedene Drehstellungssignale (SH1, SH2) zugeführt werden.

4. Ansteuerschaltung nach einem der Ansprüche 1 bis 3,
**dadurch gekennzeichnet, dass** die erste Blockierschutzeinheit (10) die Treiberstufe (6) deaktiviert, indem sie ein Steuersignal (S_{SD1}) an einen Abschalteingang (SD1) der Treiberstufe (6) abgibt.

5. Ansteuerschaltung nach einem der Ansprüche 1 bis 4,
**dadurch gekennzeichnet, dass** die zweite Blockierschutzeinheit (12) die Treiber-Versorgungsspannung (U_{VCC}) über ein einem Spannungsversorgungseingang (VCC) der Treiberstufe (6) vorgeschaltetes Schaltelement (S1) abschaltet.

6. Ansteuerschaltung nach einem der Ansprüche 1 bis 5,
**dadurch gekennzeichnet, dass** die zweite Überstromschutzeinheit (16) über ein Betriebssignal (S_{B}) einer der Blockierschutzeinheiten (10, 12) deaktiviert wird.

7. Ansteuerschaltung nach einem der Ansprüche 1 bis 6,
**dadurch gekennzeichnet, dass** die erste Überstromschutzeinheit (14) die Treiberstufe (6) deaktiviert, indem sie ein Steuersignal (S_{SD2}) an einen Abschalteingang (SD2) der Treiberstufe (6) abgibt.

8. Ansteuerschaltung nach einem der Ansprüche 1 bis 6,
**dadurch gekennzeichnet, dass** die zweite Überstromschutzeinheit (16) die Treiber-Versorgungsspannung (U_{VCC}) über ein dem Spannungsversorgungseingang (VCC) der Treiberstufe (6) vorgeschaltetes Schaltelement (S2) abschaltet.

9. Ansteuerschaltung nach einem der Ansprüche 1 bis 8,
**dadurch gekennzeichnet, dass** die Treiber-Versorgungsspannung (U_{VCC}) über einen innerhalb des Motors (M) angeordneten Temperaturwächter (18) dem Spannungsversorgungseingang (VCC) der Treiberstufe (6) zugeführt wird.

10. Ansteuerschaltung nach einem der Ansprüche 1 bis 9,
**gekennzeichnet durch** eine Ausgestaltung für einen dreisträngigen Motor (M) mit drei in Stern- oder Dreieckschaltung geschalteten Statorwicklungen (U, V, W), wobei die Halbleiter-Endstufe (2) als Vollbrücke mit sechs Schaltelementen (T1 bis T6) aufgebaut ist, die jeweils paarweise in aufeinanderfolgend verschiedenen Kombinationen über die Treiberstufe (6) angesteuert werden.

## Claims

1. A control circuit (1) for a brushless, electronically commutated direct current motor (M) comprising, a semiconductor output stage (2), which is driven by an electronic commutation control (4) via a driver stage (6) for the time-offset control of stator coils (U, V, W) of the motor (M) for the purpose of producing a magnetic rotation field for a rotor depending on the rotor rotation position,
**characterized by** two redundant stall protection units (10, 12) controlling the rotor's rotation of the motor (M) during operation, whereby in the event of a determined stall status the first stall protection unit (10) deactivates the driver stage (6) and the second stall protection unit (12) shuts off a supply voltage (U*_{VCC}*) for the driver (6), and two redundant excess current protection units (14, 16) which monitor the motor operating current, whereby the first excess current protection unit (14) deactivates the driver stage (6) in the event of an exceeding of a first current limiting value and whereby the second excess current protection unit (16) shuts off the supply voltage (U*_{VCC}*) for the driver stage (6) in the event of an exceeding of a second current limiting value, whereby in adaption it is provided a software current limitation, which is integrated in the control circuit (1), that the first current limit value of the first excess current protection unit (14) is slightly larger than a upper threshold of the software current limitation for the operating current,
while the second current limit value of the second excess current protection unit (16) is slightly larger than a lower threshold value of the software current limitation for the initial current, so that - if the electronically software current limitation should fail - will be switched off at least if the second current limit value is reached or exceeded while the start-up and during the operation at least if the first current limit value is reached or exceeded, whereby the second excess current protection unit (16) will be deactivated during operation at a fixed running of the motor (M).

2. Control circuit according to claim 1, **characterized in that** two input signals are supplied to each of the two stall protection units (10, 12), namely on the one hand a driving signal (ST1/ST2) of the commutation control (4) and on the other hand a rotor rotation position signal (SH1/SH2).

3. Control circuit according to claim 2, **characterized in that** two different driving signals (ST1, ST2), as well as two different rotation position signals (SH1, SH2) are supplied to the both stall protection units (10, 12).

4. Control circuit according to one of the claims 1 to 3, **characterized in that** the first stall protection unit (10) deactivates the driver stage (6) **in that** it sends a control signal (S*_{SD1}*) to a switch input (SD1) of the driver stage (6).

5. Control circuit according to one of the claims 1 to 4, **characterized in that** the second stall protection unit (12) shuts off the driver supply current (U_{VCC}) via a switch element (S1) upstream from a voltage supply input (VCC) of the driver stage (6).

6. Control circuit according to one of the claims 1 to 5, **characterized in that** the second excess current protection unit (16) is deactivated via an operating signal (S_{B}) of one of the stall protection units (10, 12).

7. Control circuit according to one of the claims 1 to 6, **characterized in that** the first excess current protection unit (14) deactivates the driver stage (6) by sending a control signal (S*_{SD2}*) to a shut-off input (SD2) of the driver stage (6).

8. Control circuit according to one of the claims 1 to 6, **characterized in that** the second excess current protection unit (16) shuts off the driver supply voltage (U*_{VCC}*) via a switch element (S2) upstream from the voltage supply input (VCC) of the driver stage (6).

9. Control circuit according to one of the claims 1 to 8, **characterized in that** the supply voltage (U*_{VCC}*) is supplied to a voltage supply input (VCC) of the driver stage (6) via a temperature monitor (18) placed inside the motor (M).

10. Control circuit according to one of the claims 1 to 9, **characterized in that** the motor in the form of a three-phase motor (M) with three stator coils (U, V, W) connected in a star or a triangle circuit, whereby the semiconductor output stage (2) is constructed as a full bridge with six switch elements (T1 to T6) which are controlled in pairs in successively differing combinations via the driver stage (6).

## Revendications

1. Circuit de commande (1) pour un moteur à courant continu (M) sans collecteur, à commutation électronique, comprenant un étage final semi-conducteur (2), qui est commandé par une commande de commutation (4) électronique par l'intermédiaire d'un étage d'attaque (6) servant à commander avec un décalage temporel des enroulements de stator (U, V, W) du moteur (M) en vue de produire un champ tournant magnétique pour un rotor en fonction de la position de rotation du rotor,
**caractérisé par** deux unités de protection contre le blocage (10, 12) redondantes, qui surveillent le moteur (M) en fonctionnement concernant la rotation du rotor, sachant que dans le cas d'un arrêt constaté, la première unité de protection contre le blocage (10) désactive l'étage d'attaque (6) et la deuxième unité de protection contre le blocage (12) met hors service une tension d'alimentation (U_{VCC}) pour l'étage d'attaque (6), et
par deux unités de protection contre les surintensités de courant (14, 16) redondantes, qui surveillent le courant de fonctionnement du moteur, sachant que la première unité de protection contre les surintensités de courant (14) désactive, dans le cas d'un dépassement d'une première valeur limite de courant, l'étage d'attaque (6), et sachant que la deuxième unité de protection contre les surintensités de courant (16) met hors service, dans les cas d'un dépassement d'une deuxième valeur limite de courant, la tension d'alimentation (U_{VCC}) pour l'étage d'attaque (6), sachant qu'il est prévu de manière adaptée à un système de limitation de courant logiciel intégré dans le circuit de commande (1) que la première valeur limite de courant de la première unité de protection contre les surintensités de courant (14) est légèrement plus grande qu'une valeur de seuil supérieure du système de limitation de courant logiciel pour le courant de fonctionnement, tandis que la deuxième valeur limite de courant de la deuxième unité de protection contre les surintensités de courant (16) est légèrement plus grande qu'une valeur de seuil inférieure du système de limitation de courant logiciel pour le courant de démarrage de sorte qu'on procède à la mise hors service en cas de panne éventuelle du système de limitation de courant logiciel électronique lors du démarrage au plus tard lorsque la deuxième valeur limite de courant est atteinte ou dépassée et en fonctionnement au plus tard lorsque la première valeur limite de courant est atteinte ou dépassée, sachant que la deuxième unité de protection contre les surintensités de courant (16) en fonctionnement est désactivée lorsque le fonctionnement du moteur (M) est constaté.

2. Circuit de commande selon la revendication 1, **caractérisé en ce que** deux signaux d'entrée, à savoir d'une part un signal d'attaque (ST1/ST2) de la commande de commutation (4) et d'autre part un signal de position de rotation du rotor (SH1/SH2) d'un système de détection de position de rotation (Hl à H3) sont amenés à chacune des deux unités de protection contre le blocage (10, 12).

3. Circuit de commande selon la revendication 2, **caractérisé en ce que** deux signaux d'attaque (ST1, ST2) différents ainsi que deux signaux de position de rotation (SH1, SH2) différents sont amenés aux deux unités de protection contre le blocage (10, 12).

4. Circuit de commande selon l'une quelconque des revendications 1 à 3,
**caractérisé en ce que** la première unité de protection contre le blocage (10) désactive l'étage d'attaque (6) **en ce qu'**elle émet un signal de commande (S_{SD1}) à une entrée de mise hors service (SD1) de l'étage d'attaque (6).

5. Circuit de commande selon l'une quelconque des revendications 1 à 4,
**caractérisé en ce que** la deuxième unité de protection contre le blocage (12) met hors service la tension d'alimentation d'attaque (U_{VCC}) par l'intermédiaire d'un élément de commutation (S1) installé en amont d'une entrée d'alimentation de tension (VCC) de l'étage d'attaque (6).

6. Circuit de commande selon l'une quelconque des revendications 1 à 5,
**caractérisé en ce que** la deuxième unité de protection contre les surintensités de courant (16) est désactivée par l'intermédiaire d'un signal de fonctionnement (S_{B}) d'une des unités de protection contre le blocage (10, 12).

7. Circuit de commande selon l'une quelconque des revendications 1 à 6,
**caractérisé en ce que** la première unité de protection contre les surintensités de courant (14) désactive l'étage d'attaque (6) **en ce qu'**elle émet un signal de commande (S_{SD2}) à une entrée de mise hors service (SD2) de l'étage d'attaque (6).

8. Circuit de commande selon l'une quelconque des revendications 1 à 6,
**caractérisé en ce que** la deuxième unité de protection contre les surintensités de courant (16) met hors service la tension d'alimentation d'attaque (U_{VCC}) par l'intermédiaire d'un élément de commutation (S2) installé en amont de l'entrée d'alimentation de courant (VCC) de l'étage d'attaque (6).

9. Circuit de commande selon l'une quelconque des revendications 1 à 8,
**caractérisé en ce que** la tension d'alimentation d'attaque (U_{VCC}) est amenée par l'intermédiaire d'un contrôleur de température (18) disposé à l'intérieur du moteur (M) à l'entrée d'alimentation de tension (VCC) de l'étage d'attaque (6).

10. Circuit de commande selon l'une quelconque des revendications 1 à 9,
**caractérisé par** une configuration pour un moteur (M) à trois brins comprenant trois enroulements de stator (U, V, W) montés en un circuit en étoile ou triangulaire, sachant que l'étage final semi-conducteur (2) présente une structure sous la forme d'un pont intégral comprenant six éléments de commutation (T1 à T6), qui sont commandés respectivement par paire dans des combinaisons différentes successives par l'intermédiaire de l'étage d'attaque (6).
